# EUROPÄISCHE PATENTSCHRIFT

(11) **EP 3 140 061 B1**
(45) Veröffentlichungstag und Bekanntmachung des Hinweises auf die Patenterteilung: **19.06.2019**
(21) Anmeldenummer: 15709954.0
(22) Anmeldetag: 16.03.2015
(51) Int. Cl.: B21J 15/06, B21J 15/50, F16B 19/12

(54) **VERFAHREN ZUR BEFESTIGUNG MEHRERER WERKSTÜCKE MITTELS EINES HOHLEN NIETELEMENTS**
METHOD FOR FIXING A PLURALITY OF WORKPIECES BY MEANS OF A HOLLOW RIVET ELEMENT
PROCÉDÉ DE FIXATION D'UNE PLURALITÉ DE PIÈCES AU MOYEN D'UN ÉLÉMENT DE RIVETAGE CREUX

(30) Priorität: 07.05.2014 DE 102014208513
(43) Veröffentlichungstag der Anmeldung: 15.03.2017
(73) Patentinhaber: Bayerische Motoren Werke Aktiengesellschaft, 80809 München (DE)
(72) Erfinder: LEHNER, Stephan, 93083 Gebelkofen (DE); WAGNER, Julia, 85748 Garching bei München (DE); WILHELM, Maximilian, 87439 Kempten (DE)
(86) Internationale Anmeldenummer: PCT/EP2015/055415
(87) Internationale Veröffentlichungsnummer: WO 2015/169491

(56) Entgegenhaltungen:
- DE-C- 689 584
- FR-A1- 2 713 724
- US-A- 2 445 803
- US-A- 2 492 590
- US-A- 2 562 721
- US-B1- 6 301 766

## Beschreibung

Die Erfindung betrifft ein Verfahren zur Befestigung mehrerer Werkstücke mittels eines hohlen Nietelements.

Zum Verbinden von mehreren Werkstücken ist eine Verbindung durch Niete eine alte und zuverlässige Methode. Für Situationen, in denen nur ein einseitiger Zugang zur Verbindungsstelle möglich ist, sind Blindniete bekannt. Bei Blindnieten wird nach Einführen des Niets in die Befestigungsöffnungen der zu verbindenden Werkstücke ein Nietdorn gezogen, sodass sich der Niet auf der nicht zugänglichen Rückseite der Werkstücke plastisch verformt und diese dauerhaft verbindet. Der Nietdorn reißt nach der Verbindungsausbildung ab.

Blindniete sind aufwendig in der Produktion und weisen deswegen im Vergleich zu anderen Nieten relativ hohe Stückkosten auf. Zudem ist ein nachträgliches Anziehen der Verbindung ist nicht mehr möglich.

Die US 2 445 803 A bildet die Basis für den Oberbegriff des Anspruchs 1 und beschreibt ein Verfahren zum Vernieten mehrerer Werkstücke mittels eines hohlen Nietelementes, das durch das Einbringen eines Fluids unter Hochdruck umgeformt wird. Bei diesem Verfahren wird eine Flüssigkeit in den Hohlraum des Nietelementes eingefüllt und mit einem bestimmten Druck beaufschlagt. Im Laufe des Verfahrens wird der Druck mehrmals verringert und anschließend wieder auf den bestimmten Druck erhöht, um Teile des Nietelementes kalt zu verfestigen.

Die US 6 301 766 B1 zeigt ebenfalls ein Verfahren zum Befestigen mehrerer Werkstücke mittels eines Nietelementes, wobei das Nietelement hohl ist. Das Nietelement wird dadurch umgeformt, dass ein unter Druck stehendes Fluid in den Hohlraum eingebracht wird.

Auch die US 2 562 721 A offenbart ein Verfahren zur Befestigung mehrerer Werkstücke mittels eines hohlen Nietelementes, bei dem das Nietelement dadurch umgeformt werden kann, dass ein Fluid unter Hochdruck in den Hohlraum des Nietelementes eingebracht wird.

Die DE 689 584 C zeigt ebenfalls ein Verfahren zur Befestigung von Werkstücken mittels hohlen Nieten, wobei die unter Hochdruck eingeführte Flüssigkeit nach der Verformung im Niet verbleibt.

Die US 2 492 590 A beschreibt eine Verfahren zum Befestigen mehrerer Werkstücke mittels hohler Nieten, wobei das Schließende der Nieten durch das Einbringen eines Fluids unter Druck verformt wird.

Entsprechend ist es die Aufgabe der Erfindung, ein Verfahren zur Befestigung mehrerer Werkstücke bereitzustellen, das kostengünstig ist.

Die Aufgabe wird gelöst durch ein Verfahren gemäß Anspruch 1. Durch die Erfindung ist es möglich, das Nietelement auf einfache Weise zur Befestigung mehrerer Werkstücke zu verwenden. Insbesondere sind keine komplexen Strukturen am Nietelement selber notwendig, sodass die Stückkosten drastisch gesenkt werden können. Außerdem wird die Klemmlänge des Nietelements durch die Auswahl des Drucks bestimmt. Dadurch ist es möglich, dass baugleiche Nietelemente für verschiedenartige Verbindungen herangezogen werden können, sodass die Stückkosten der Nietelemente weiter verringert werden können. Weiterhin ist erfindungsgemäß vorgesehen, dass das Fluid, nach der Verformung des Nietelements, mit einem erhöhten Druck erneut in den Hohlraum eingebracht wird, um die Verbindung der beiden Werkstücke nachzuziehen.Beispielsweise wird das Nietelement und/oder das Fluid vor dem Einbringen des Fluids erwärmt, wodurch der zur Verformung notwendige Druck des Fluids reduziert werden kann, um die Kosten des Verfahrens weiter zu senken.

Vorzugsweise wird das Fluid aus dem Hohlraum entfernt oder entweicht, nachdem die gewünschte Verformung des Nietelements erzielt wurde. Auf diese Weise ist es möglich, auch fluidempfindliche Werkstücke mittels des erfindungsgemäßen Verfahrens zu verbinden.

In einer Ausgestaltung der Erfindung sind der Druck und die Temperatur des Fluids an die gewünschte Klemmlänge des Nietelements angepasst, sodass die Klemmlänge des Nietelements durch die Auswahl des Drucks und der Temperatur bestimmt werden kann. Auf diese Weise ist es möglich, dass baugleiche Nietelemente für verschiedenartige Verbindungen herangezogen werden können, sodass die Stückkosten der Nietelemente weiter verringert werden können.

In einer Ausführungsvariante wird ein Nietelement verwendet, mit einer hohlen, zylinderförmigen Hülse, die ein Setzende, ein Schließende und einen sich zwischen dem Setzende und dem Schließende erstreckenden Schaft aufweist, und einem Kragen, der am Setzende an der Hülse angeordnet ist, wobei die Hülse am Setzende offen und am Schließende geschlossen ist, wobei der Schaft und/oder das Schließende wenigstens einen Formabschnitt aufweist, der verglichen mit anderen Abschnitten des Schafts und/oder des Schließendes eine andere Verformbarkeit aufweist. Durch die Ausbildung eines Formabschnittes mit veränderter Verformbarkeit ist es möglich, die Form des Schließendes nach dem plastischen Verformen auf einfache Weise zu beeinflussen.

Vorzugsweise wird der Formabschnitt durch wenigstens einen Abschnitt gebildet, der eine Wandstärke aufweist, die sich von der Wandstärke des Schafts und/oder des Schließendes außerhalb des Formabschnittes unterscheidet, sodass die Ausbildung des Formabschnittes einfach und kostengünstig zu realisieren ist.

Beispielsweise wird der Formabschnitt durch Schwächung des Schaftes und/oder des Schließendes, insbesondere durch eine Einkerbung, gebildet, wodurch eine einfache und kostengünstige Möglichkeit der Bildung eines Formabschnittes gegeben ist.

Der Kragen und die Hülse können einstückig ausgeführt sein, wodurch die Herstellungskosten des Nietelements weiter verringert werden.

In einer Ausführungsform der Erfindung wird zum Lösen der Nietverbindung das Fluid erneut unter Hochdruck in den Hohlraum des Nietelements eingebracht, wobei der Druck so hoch gewählt ist, dass das plastisch verformte Schließende des Nietelements abreißt. Auf diese Weise ist es möglich, die Verbindung der mehreren Werkstücke mit dem gleichen Werkzeug zu lösen, das auch zum Verbinden der Werkstücke verwendet wurde.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 ein Nietelement zum Verbinden mehrerer Werkstücke nach Schritt a) eines erfindungsgemäßen Verfahrens,
- Figur 2 das Nietelement nach Figur 1 beim Durchführen der Schritte b) und c) des erfindungsgemäßen Verfahrens,
- Figur 3 das Nietelement nach Figur 1 nach Durchführung des erfindungsgemäßen Verfahrens, und
- Figur 4 das Nietelement nach Figur 1 nachdem es erfindungsgemäß gelöst wurde.

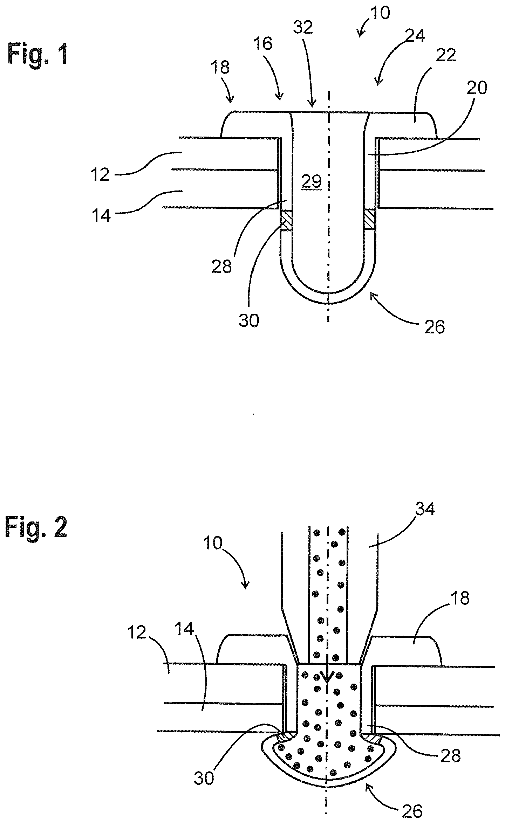

In Figur 1 ist eine Verbindungsstelle 10 zwischen zwei Werkstücken 12, 14 im Schnitt dargestellt. Die Werkstücke 12, 14 weisen jeweils eine miteinander fluchtende Öffnung 16 auf, durch die sich ein Nietelement 18 erstreckt.

Das Nietelement 18 weist eine zylinderförmige Hülse 20 und einen Kragen 22 auf, und es kann aus einem Metall oder einem Kunststoff hergestellt sein.

Die zylinderförmige Hülse 20 ist zum Beispiel kreiszylinderförmig und weist ein Setzende 24 und ein Schließende 26 auf, zwischen denen sich ein Schaft 28 erstreckt.

Die Hülse 20 ist hohl ausgeführt, wobei sie am Setzende 24 offen ist und am Schließende 26 geschlossen ist, sodass das Nietelement 18 einen einseitig geöffneten Hohlraum 29 ausbildet.

Der Schaft 28 kann einen Formabschnitt 30 haben, der sich in Umfangsrichtung vollständig um die Hülse 20 erstreckt.

Der Formabschnitt 30 weist verglichen mit anderen Abschnitten des Schaftes 28 eine andere Verformbarkeit auf. Beispielsweise ist die Verformbarkeit im Formabschnitt 30 gegenüber der Verformbarkeit des restlichen Schaftes 28 vergrößert.

Die unterschiedliche Verformbarkeit des Formabschnitts 30 kann durch einen Abschnitt gebildet werden, der eine Wandstärke aufweist, die sich von der Wandstärke des Schaftes 28 außerhalb des Formabschnitts 30 unterscheidet.

Auch kann der Formabschnitt 30 durch eine Schwächung des Schaftes 28, insbesondere durch Einkerbungen, gebildet werden.

Selbstverständlich kann der Formabschnitt 30 am Schließende 26 der Hülse 20 vorgesehen sein, wobei das oben Gesagte auf das Schließende 26 entsprechend Anwendung findet. Zum Beispiel unterscheidet sich die Verformbarkeit des Formabschnittes dann von der Verformbarkeit des restlichen Schließendes 26.

Denkbar ist es selbstverständlich auch, dass der Formabschnitt 30 sich nicht vollumfänglich um den Umfang der Hülse 20 erstreckt, sondern in Umfangsrichtung nur abschnittsweise.

Der Formabschnitt 30 kann auch durch einen Abschnitt gebildet werden, der eine Verfestigung aufweist, die sich von der Verfestigung des Schaftes 28 oder des Schließendes 26 unterscheidet.

Der Kragen 22 ist am Setzende 24 der Hülse 20 angeordnet und kann einstückig mit der Hülse 20 ausgeführt sein.

Die Öffnung der Hülse 20 am Setzende 24 bildet einen Einblasmund 32, an den eine Düse 34 eines Verbindungswerkzeugs (nicht gezeigt) dicht angesetzt werden kann.

Zur Verbindung der Werkstücke 12, 14 wird, nachdem das Nietelement 18, wie in Figur 1 dargestellt ist, in die Öffnung 16 eingesetzt wurde, ein Fluid, beispielsweise Luft, unter Hochdruck in den Hohlraum 29 eingebracht.

Hierzu wird, wie in Figur 2 dargestellt, die Düse 34 des Verbindungswerkzeugs in den Einblasmund 32 eingeführt, sodass der Hohlraum 29 vollständig geschlossen ist.

Nun wird unter Hochdruck ein Fluid, in den Figuren durch Punkte angedeutet, in den Hohlraum 29 gepresst.

Durch den Druck des Fluids wird die Hülse 20 des Nietelements 18, insbesondere das Schließende 26 plastisch verformt und das Nietelement 18 gesetzt. Das Schließende 26 erhält zum Beispiel eine Pilzform.

Bei der Verformung wird das Schließende 26 und der aus dem Werkstück 14 herausragende Teil des Schaftes 28 derart verbreitert, dass sie einen Hinterschnitt ausbilden, der am Werkstück 14 anliegt.

Die Verformung und Gestalt des Hinterschnitts kann durch die Art und/oder die Geometrie des Formabschnitts 30 beeinflusst werden.

In der gezeigten Ausführungsform ist der Formabschnitt 30 leichter verformbar als die übrigen Abschnitte des Schaftes 28, sodass sich der Schaft 28 im Bereich des Formabschnitts 30 verformt und weitet.

Um eine bessere Verformbarkeit des Nietelementes 18 zu erreichen, kann das Nietelement 18 vor dem Einbringen des Fluids erwärmt werden.

Auch kann das Fluid selbst vor dem Einbringen erwärmt werden.

Auch ist es denkbar, dass der Druck und/oder die Temperatur des Fluids an die gewünschte Klemmlänge des Nietelements angepasst ist. Denn auch durch den Druck und/oder die Temperatur des Fluids lässt sich Einfluss auf die Verformung des Nietelements 18 nehmen. Zum Beispiel führt ein hoher Druck zu einer nahezu vollständigen sphärischen Verformung des Schließendes 26.

Nachdem die gewünschte Verformung des Nietelements 18 erzielt wurde, wird die Düse 34 vom Nietelement 18 entfernt, und das Fluid kann aus dem Hohlraum 29 entweichen.

Auch ist es denkbar, dass das Fluid durch die Düse 34, beispielsweise durch die Erzeugung eines Unterdrucks, aus dem Hohlraum 29 entfernt wird.

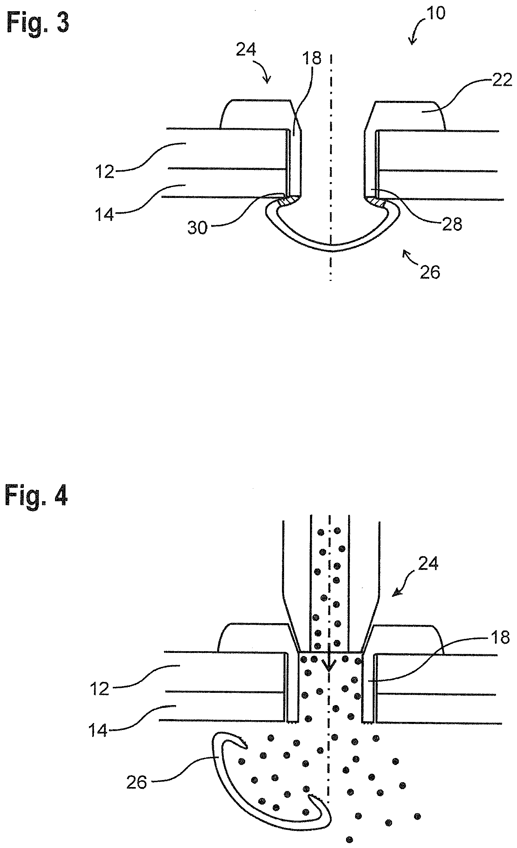

Die beiden Werkstücke 12, 14 sind nun durch das Nietelement 18 miteinander fest verbunden, wie in Figur 3 zu erkennen ist.

Um die sichere Verbindung der Werkstücke 12, 14 durch das Nietelement 18 zu gewährleisten, kann erneut Fluid in den Hohlraum 29 des Nietelements eingebracht, das oben beschriebene Verfahren also wiederholt werden.

Ebenfalls kann die Verbindung zwischen den beiden Werkstücken 12, 14 nachträglich angezogen werden, beispielsweise nach der Hälfte der vorgesehenen Lebensdauer der Werkstücke 12, 14. Hierzu kann das oben beschriebene Verfahren wiederholt werden, jedoch wird dabei das Fluid mit einem höheren Druck als beim vorherigen, erstmaligen Einbringen in den Hohlraum 29 des Nietelements 18 gepresst, um die Werkstücke 12, 14 wieder gegeneinander zu verpressen.

Auch kann die durch das Nietelement 18 erzeugte Verbindung zwischen den beiden Werkstücken 12, 14 wieder gelöst werden, beispielsweise wenn eines der Werkstücke 12, 14 ausgetauscht werden soll. Hierzu wird, wie in Figur 4 dargestellt, die Düse 34 wieder an den Einblasmund 32 angelegt und erneut Fluid in den Hohlraum 29 des Nietelements 18 eingebracht. Der Druck des Fluids ist in diesem Fall jedoch so hoch gewählt, dass das Schließende 26 des Nietelements abreißt, wodurch der bei der Verformung erzeugte Hinterschnitt mit abgerissen wird. Auf diese Weise kann nun der verbleibende Teil des Nietelements 18 wieder aus der Öffnung 16 entfernt und die beiden Werkstücke 12, 14 voneinander getrennt werden.

Dabei kann der Formabschnitt 30 als vorgesehene Abrissstelle dienen, wenn er entsprechend schwach ausgebildet ist.

## Patentansprüche

1. Verfahren zur Befestigung mehrerer Werkstücke (12, 14) mittels eines hohlen Nietelements (18) mit einem offenen Setzende (24) und einem geschlossenen Schließende (26), mit den folgenden Schritten:
a) Durchführen des Nietelements (18) durch miteinander fluchtende Öffnungen (16) der Werkstücke (12, 14),
b) Auswahl eines Hochdrucks zur Erzielung einer gewünschten Klemmlänge des Nietelementes,
c) Einführen eines Fluids, insbesondere Luft, unter dem Hochdruck von dem Setzende (24) des Nietelements (18) aus in einen Hohlraum (29) des Nietelements (18),
d) plastisches Verformen und Setzen des Nietelements (18) durch das Fluid am geschlossenen Schließende (26) des Nietelements (18), **gekennzeichnet durch**
e) erneutes Einbringen eines Fluids unter einem höheren Druck als in Verfahrensschritt c) in den Hohlraum (29) des Nietelements (18), um die Verbindung der Werkstücke (12, 14) nachzuziehen.

2. Verfahren nach Anspruch 1, **dadurch gekennzeichnet, dass** das Nietelement (18) und/oder das Fluid vor dem Einbringen des Fluids erwärmt wird.

3. Verfahren nach Anspruch 1 oder 2, **dadurch gekennzeichnet, dass**, nachdem die gewünschte Verformung des Nietelements (18) erzielt wurde, das Fluid aus dem Hohlraum (29) entfernt wird oder entweicht.

4. Verfahren nach Anspruch 2 oder 3, sofern auf Anspruch 2 rückbezogen, **dadurch gekennzeichnet, dass** die Temperatur des Fluids an die gewünschte Klemmlänge des Nietelements (18) angepasst ist.

5. Verfahren nach einem der vorhergehenden Ansprüche, **dadurch gekennzeichnet, dass** ein Nietelement (18) verwendet wird, mit einer hohlen, zylinderförmigen Hülse (20), die ein Setzende (24), ein Schließende (26) und einen sich zwischen dem Setzende (24) und dem Schließende (26) erstreckenden Schaft (28) aufweist, und einem Kragen (22), der am Setzende (24) an der Hülse (20) angeordnet ist, wobei die Hülse (20) am Setzende (24) offen und am Schließende (26) geschlossen ist, wobei der Schaft (28) und/oder das Schließende (26) wenigstens einen Formabschnitt (30) aufweist, der verglichen mit anderen Abschnitten des Schafts (28) und/oder des Schließendes (26) eine andere Verformbarkeit aufweist.

6. Verfahren nach Anspruch 5, **dadurch gekennzeichnet, dass** der Formabschnitt (30) durch wenigstens einen Abschnitt gebildet wird, der eine Wandstärke aufweist, die sich von der Wandstärke des Schafts (28) und/oder des Schließendes (26) außerhalb des Formabschnitts (30) unterscheidet.

7. Verfahren nach Anspruch 6, **dadurch gekennzeichnet, dass** der Formabschnitt (30) durch Schwächung des Schaftes (28) und/oder des Schließendes (26), insbesondere durch Einkerbung, gebildet wird.

8. Verfahren nach einem der Ansprüche 5 bis 7, **dadurch gekennzeichnet, dass** der Kragen (22) und die Hülse (20) einstückig ausgeführt sind.

9. Verfahren nach einem der vorhergehenden Ansprüche, **dadurch gekennzeichnet, dass** zum Lösen der Verbindung der Werkstücke (12, 14) das Fluid erneut in den Hohlraum (29) des Nietelements (18) unter Hochdruck eingebracht wird, wobei der Druck so hoch gewählt ist, dass das Schließende (26) des Nietelements (18) abreißt.

## Claims

1. A method for fastening a plurality of workpieces (12, 14) by means of a hollow riveting element (18) with an open setting end (24) and a closed closing end (26), having the following steps:
a) passing the riveting element (18) through openings (16) in the workpieces (12, 14) which are flush with one another,
b) selecting a high pressure in order to obtain a desired clamping length of the riveting element,
c) introducing a fluid, especially air, at the high pressure from the setting end (24) of the riveting element (18) into a cavity (29) of the riveting element (18),
d) plastically deforming and setting the riveting element (18) by the fluid at the closed closing end (26) of the riveting element (18),
**characterised by**
e) renewed introduction of a fluid at a higher pressure than in method step c) into the cavity (29) of the riveting element (18), in order to tighten the connection of the workpieces (12, 14).

2. A method according to Claim 1, **characterised in that** the riveting element (18) and/or the fluid is heated prior to the introduction of the fluid.

3. A method according to Claim 1 or Claim 2, **characterised in that**, once the desired deformation of the riveting element (18) has been achieved, the fluid is removed or escapes from the cavity (29).

4. A method according to Claim 2 or Claim 3, insofar as related to Claim 2, **characterised in that** the temperature of the fluid is adapted to the desired clamping length of the riveting element (18).

5. A method according to one of the preceding claims, **characterised in that** a riveting element (18) is used, with a hollow, cylindrical sleeve (20) which has a setting end (24), a closing end (26) and a shank (28) which extends between the setting end (24) and the closing end (26), and with a collar (22) which is arranged on the setting end (24) on the sleeve (20), the sleeve (20) being open at the setting end (24) and closed at the closing end (26), the shank (28) and/or the closing end (26) having at least one forming portion (30) which has a different deformability compared with other portions of the shank (28) and/or of the closing end (26).

6. A method according to Claim 5, **characterised in that** the forming portion (30) is formed by at least one portion which has a wall thickness which differs from the wall thickness of the shank (28) and/or of the closing end (26) outside the forming portion (30).

7. A method according to Claim 6, **characterised in that** the forming portion (30) is formed by weakening the shank (28) and/or the closing end (26), especially by notching.

8. A method according to one of Claims 5 to 7, **characterised in that** the collar (22) and the sleeve (20) are embodied in one piece.

9. A method according to one of the preceding claims, **characterised in that** to release the connection of the workpieces (12, 14) the fluid is again introduced into the cavity (29) of the riveting element (18) at high pressure, the pressure being selected to be so high that the closing end (26) of the riveting element (18) tears off.

## Revendications

1. Procédé de fixation de plusieurs pièces (12, 14) au moyen d'un élément de rivetage creux (18) ayant une extrémité de positionnement ouverte (24) et une extrémité de fermeture fermée (26), comprenant les étapes suivantes consistant à :
a) faire passer l'élément de rivetage (18) au travers d'ouvertures alignées les unes aux autres (16) des pièces (12, 14),
b) choisir une pression élevée pour obtenir la longueur de serrage souhaitée de l'élément de rivetage,
c) introduire un fluide en particulier de l'air sous la pression élevée, à partir de l'extrémité de positionnement (24) de l'élément de rivetage (18) dans le volume creux (29) de cet élément (18),
d) déformer plastiquement et positionner l'élément de rivetage (18) au moyen du fluide à l'extrémité de fermeture fermée (26) de l'élément de rivetage (18),
**caractérisé par**
e) une étape consistant à introduire à nouveau un fluide sous une pression supérieure à la pression lors de l'étape c) dans le volume creux (29) de l'élément de rivetage (18) pour resserrer la liaison des pièces (12, 14).

2. Procédé conforme à la revendication 1,
**caractérisé en ce que**
l'élément de rivetage (18) et/ou le fluide est/sont chauffé(s) avant l'introduction du fluide.

3. Procédé conforme à la revendication 1 ou 2,
**caractérisé en ce qu'**
après que la déformation souhaitée de l'élément de rivetage (18) ait été obtenue, le fluide est extrait ou évacué du volume creux (29).

4. Procédé conforme à la revendication 2, ou à la revendication 3, dans la mesure ou elle dépend de la revendication 2,
**caractérisé en ce que**
la température du fluide est adaptée à la longueur de serrage souhaitée de l'élément de rivetage (18).

5. Procédé conforme à l'une des revendications précédentes,
**caractérisé en ce qu'**
on utilise un élément de rivetage (18) ayant un manchon cylindrique creux (20) qui comporte une extrémité de positionnement (24) une extrémité de fermeture (26) et une tige (28) s'étendant entre l'extrémité de positionnement (24) et l'extrémité de fermeture (18) ainsi qu'une collerette (22) qui est située sur le manchon (20) au niveau de l'extrémité de positionnement (24), le manchon (20) étant ouvert au niveau de l'extrémité de positionnement et fermé au niveau de l'extrémité de fermeture (26), et la tige (28) et/ou l'extrémité de fermeture (26) comporte au moins un segment de mise en forme (30) ayant une aptitude au formage autre que celles des autres segments de la tige (28) et/ou de l'extrémité de fermeture (26).

6. Procédé conforme à la revendication 5,
**caractérisé en ce que**
le segment de mise en forme (30) est formé par au moins un segment qui a une épaisseur de paroi qui diffère de l'épaisseur de paroi de la tige (28) et/ou de l'extrémité de fermeture (26) à l'extérieur du segment de mise en forme (30).

7. Procédé conforme à la revendication 6,
**caractérisé en ce que**
le segment de mise en forme (30) est formé par un affaiblissement de la tige (28) et/ou de l'extrémité de fermeture (26), en particulier par une entaille.

8. Procédé conforme à l'une des revendications 1 à 7,
**caractérisé en ce que**
la collerette (22) et le manchon (20) sont réalisés en une seule pièce.

9. Procédé conforme à l'une des revendications précédentes,
**caractérisé en ce que**
pour desserrer la liaison des pièces (12, 14) le fluide est à nouveau introduit sous pression élevée dans le volume creux (29) de l'élément de rivetage (18), la pression étant choisie de sorte que l'extrémité de fermeture (26) de l'élément de rivetage (18) soit arrachée.
